**Europäisches Patentamt**

**European Patent Office**

**Office européen des brevets**

(19)

(11) Veröffentlichungsnummer : **0 365 604 B1**

(12)

# EUROPÄISCHE PATENTSCHRIFT

(45) Veröffentlichungstag der Patentschrift :
**18.03.92 Patentblatt 92/12**

(51) Int. Cl.$^5$ : **B60T 8/66**

(21) Anmeldenummer : **88908202.0**

(22) Anmeldetag : **15.09.88**

(86) Internationale Anmeldenummer :
**PCT/EP88/00840**

(87) Internationale Veröffentlichungsnummer :
**WO 89/02382 23.03.89 Gazette 89/07**

(54) **BREMSSCHLUPFREGLER.**

(30) Priorität : **16.09.87 DE 3731075**

(43) Veröffentlichungstag der Anmeldung :
**02.05.90 Patentblatt 90/18**

(45) Bekanntmachung des Hinweises auf die
Patenterteilung :
**18.03.92 Patentblatt 92/12**

(84) Benannte Vertragsstaaten :
**DE FR GB IT SE**

(56) Entgegenhaltungen :
**EP-A- 0 140 861**
**EP-A- 0 274 397**
**DE-C- 2 254 295**
**US-A- 3 635 530**
**US-A- 3 838 890**
**US-A- 3 857 612**

(73) Patentinhaber : **ROBERT BOSCH GmbH**
**Postfach 30 02 20**
**W-7000 Stuttgart 30 (DE)**

(72) Erfinder : **VAN ZANTEN, Anton**
**Walstrasse 15/2**
**W-7257 Ditzingen 4 (DE)**
Erfinder : **RUF, Wolf-Dieter**
**Schlatthölzlesweg 17**
**W-7076 Waldstetten (DE)**
Erfinder : **KOST, Friedrich**
**Heinrich-Ebner-Strasse 24**
**W-7000 Stuttgart 50 (DE)**
Erfinder : **KREISSELMEIER, Gerhard**
**Brandaustrasse 10**
**W-3501 Ahnatal (DE)**

(74) Vertreter : **Kammer, Arno, Dipl.-Ing.**
**ROBERT BOSCH GmbH Zentralstelle**
**Patente-Elektronik Postfach 10 60 50**
**W-7000 Stuttgart 1 (DE)**

## Beschreibung

Die Erfindung betrifft einen Bremsschlupfregler mit den Merkmalen des Oberbegriffs des Anspruchs 1, wie z.B. aus DE-C-2 254 295 bekannt

### Stand der Technik

Bei bekannten Schlupfreglern für Kraftfahrzeuge wird aus den Geschwindigkeiten einer oder mehrerer Fahrzeugräder eine Referenzgröße gewonnen, die dem Verlauf der Fahrzeuggeschwindigkeit angenähert ist.. Es werden ein oder mehrere Prozentsätze dieser Referenzgröße gebildet und mit dem Geschwindigkeitssignal des Rads verglichen. Werden die als Schwellen dienenden Prozentsätze (z.B. 95% und 80%) vom Radgeschwindigkeitssignal unterschritten und rücküberschritten, so werden daraus Regelsignale abgeleitet und eine Bremsdrucksteuereinheit zur Druckvariation angesteuert (DE-C-20 63 944).

### Vorteile

Der erfindungsgemäße Regler stellt während der geregelten Bremsung eines Fahrzeugrades im Normalbetrieb einen Bremsschlupfwert ein, der dem maximalen Kraftschlußbeiwert des Rades in Längsrichtung entspricht. Zur Verbesserung der Fahrzeugbeherrschbarkeit kann das Rad über einen externen Eingriff gezielt unterbremst werden. Der Regler erzeugt sehr geringe Bremsdruckamplituden, was im Hinblick auf Komfort und Leistungsbedarf vorteilhaft ist. Da die Auswertung schlupforientiert arbeitet, besitzt er bessere Robustheit gegen Störungen als z.B. radbeschleunigungsorientierte Regler. Die übersichtliche Struktur, der geringe Speicherplatzbedarf und die geringe Zahl der Parameter sind im Hinblick auf eine Mikrorechnerrealisierung interessant.

Weitere Ausgestaltungen des Reglers und Vorteile ergeben sich aus den Unteransprüchen und der Beschreibung eines Ausführungsbeispiels anhand der Zeichnung.

### Figurenbeschreibung

Die Zeichnung zeigt ein Ausführungsbeispiel der Erfindung und zwar zeigen:
Fig. 1 ein Blockschaltbild eines Regelkreises
Fig. 2-5 Diagramme zur Erläuterung.

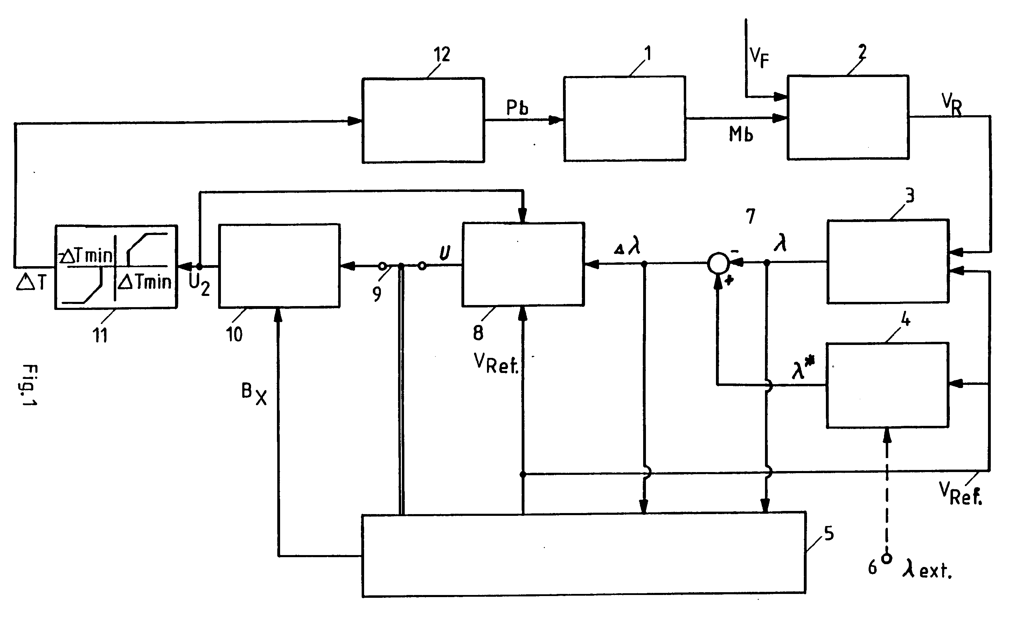

In Fig. 1 ist mit 1 eine Radbremse bezeichnet, die auf die Regelstrecke 2 einwirkt, die die Systeme Rad, Reifen und Straße umfaßt. Die Regelstrecke besitzt die Eingangsgrößen Bremsmoment $M_B$ und Fahrzeuggeschwindigkeit $v_F$ und die Ausgangsgrößen Radgeschwindigkeit $v_R$. Das gemessene Radgeschwindigkeitssignal $v_R$ wird einem Schlupfbildner 3 zugeführt, dem auch eine Referenzgröße $v_{Ref}$ aus Block 5 zugeführt wird. Die Referenzgröße wird auch einem Sollschlupfbildner 4 zugeführt, der einen zulässigen Schlupfwert z.B. 5% festlegt. Der Sollschlupfbildner kann über die Klemme 6 angesteuert und auf einen anderen Wert (z.B. in einer Kurve) umgeschaltet werden.

Der im Schlupfbildner 3 gemäß der Beziehung

$$\lambda = 1 - v_R/v_{Ref}$$

gebildete Schlupf $\lambda$ wird in dem Vergleicher 7 mit dem Sollschlupf $\lambda^*$ verglichen und die Abweichung $\Delta\lambda$ einem Regelverstärker 8 zugeführt. Dieser besitzt im wesentlichen ein Proportional-Differentialübertragungsverhalten zwischen der Regelabweichung $\Delta\lambda$ und seiner Ausgangsgröße U, einen rücksetzbaren Integralanteil (d.h. der I-Anteil wird für (U2 (K-1) $\geqq$ $T_{min}$ zurückgesetzt.), eine Abhängigkeit seiner Verstärkung von der Referenzgeschwindigkeit $v_{Ref}$ und logische Abfragen, mit denen abhängig vom Vorzeichen von $\Delta\lambda$ und $d\Delta\lambda/dt$ verschiedene Regelgesetzte in Kraft gesetzt werden.

Mit der Regelabweichung

$$\Delta\lambda = \lambda^* - \lambda$$

gelten dort folgende Beziehungen:

$$Up = Kp * \Delta\lambda \qquad \}$$
$$Ud = Kd * d\Delta\lambda/dt \qquad \} \text{ für } d\Delta\lambda/dt \leq 0$$
$$Up4 = 0 \qquad \}$$

$$Up = 0 \qquad \} \text{ für } d\Delta\lambda/dt > 0$$
$$Ud = Kd * (d\Delta\lambda/dt - \Delta\lambda^*) \qquad \} \text{ und } \Delta\lambda \leq 0$$
$$Up4 = -Kp4 * (\Delta\lambda)^* \qquad \}$$

$$Up = Kp * \Delta\lambda \qquad \} \text{ für } d\Delta\lambda/dt > 0$$
$$Ud = Kd * d\Delta\lambda/dt \qquad \} \text{ und } \Delta\lambda > 0$$
$$Up4 = 0 \qquad \}$$

Die Steuergröße U setzt sich gemäß
$$U = (Up + Ud + Up4 + Umem) * Ku_{(vRef)}$$
aus den einzelnen Anteilen zusammen.

Umem ist darin der I-Anteil, der sich aus

$$Umem(K) = Umem(K-1) + Ki * \Delta\lambda(K-1) \qquad \text{für } |U2(K-1)| < Tmin,$$
$$Umem(K) = 0 \qquad \text{für } |U2(K-1)| \geq Tmin$$

berechnet. Der Buchstabe K ist hier der Index des Abtastzeitschritts. Der I-Anteil Umem wird außerdem dann zu Null gesetzt, wenn die Regelung z.B. durch einen Schalter 9 unterbrochen ist.

Der Faktor $Ku_{(vRef)}$ berücksichtigt die Fahrzeuggeschwindigkeitsabhängigkeit der Regelstreckenparameter. Ku ist eine Funktion von $v_{Ref}$, z.B. $Ku = a_o + a_1 * v_{Ref}$, für $a_o$, $a_1$ = const.

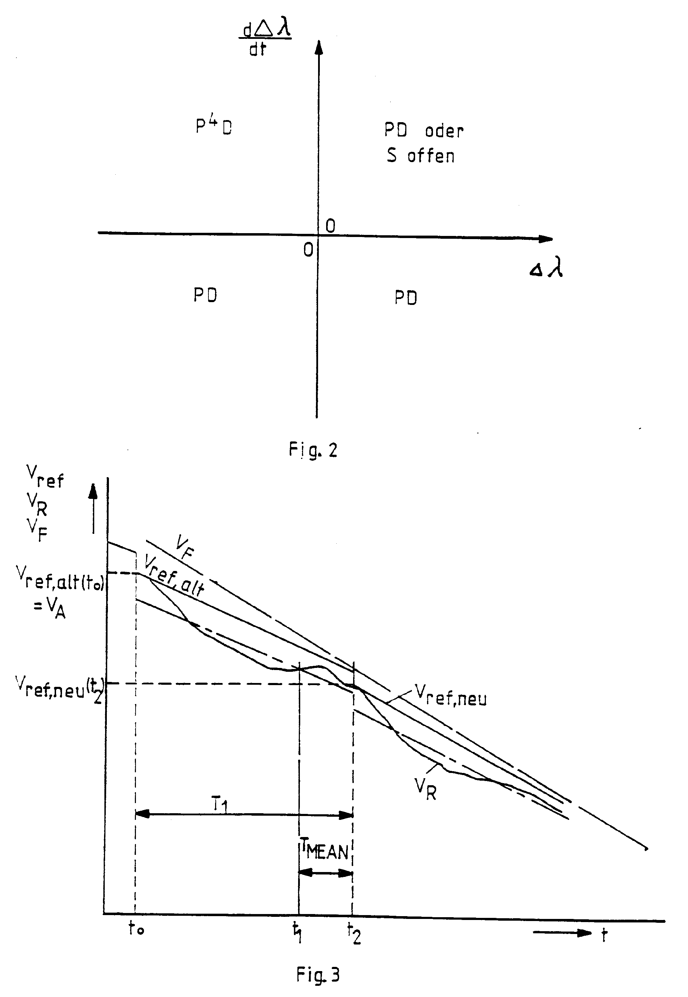

In Fig. 2 ist das Verhalten des Regelverstärkers bei bestimmten Werten von $\Delta\lambda$ und $d\Delta\lambda/dt$ ohne Integralanteil dargestellt. P steht für proportional, D für Differential.

Der Block 5 extrapoliert von Abtastzeitpunkt zu Abtastzeitpunkt (Ta) die Referenzgeschwindigkeit $v_{Ref}$ gemäß
$$v_{Ref}(K) = v_{Ref}(K-1) - Bx * Ta$$
und kann darüberhinaus in geeigneten Zeitintervallen (Anpassungsphasen) die Schlupfregelung unterbrechen, um eine Akutalisierung der geschätzten Fahrzeugverzögerung Bx (Steigung der Referenzgeschwindigkeit) sowie der Referenzgeschwindigkeit selbst vorzunehmen. Die Referenzgeschwindigkeit soll dabei einer Radgeschwindigkeit entsprechen, bei der stabiles Radverhalten beobachtet wird.

Eine Anpassungsphase beginnt, wenn alle folgenden Bedingungen erfüllt sind:

1) Seit der letzten Anpassungsphase wurde der Sollschlupf $\lambda^*$ mindestens einmal überschritten,

2) seit der letzten Anpassungsphase ist eine Zeit von mindestens $T_{Amin}$ verstrichen,

3) für die Regelabweichung gilt $\Delta\lambda > 0$,

4) und $d\Delta\lambda/dt > 0$.

Die Anpassung von $v_{Ref}$ und Bx geschieht wie folgt: Sind die obigen Bedingungen erfüllt, wird eine Druckhaltephase der Dauer Tmean eingeleitet, d.h., die Regelung wird durch Öffnen des Schalters 9 unterbrochen. Über diese Zeit wird $\lambda$ gemittelt. Der gemittelte Schlupf $\bar{\lambda}$ wird verwendet, um $v_{Ref}$ und Bx zu aktualisieren:
$$vRef,neu = vRef,alt * (1 - \bar{\lambda})$$
$$Bx,neu = (T0 * Bx,alt + V_A - v_{Refneu})/[(1 - \bar{\lambda}) \cdot (T_A + T0)].$$

Es bedeuten in den Gleichungen

$v_{Ref,neu}$, Bx,neu ... die aktualisierten Größen,

$v_{Ref,alt}$, Bx,alt ... die Größen vor der Aktualisierung

$V_A$ ... die Referenzgeschwindigkeit nach der letzten Anpassung,

$T_A$ ... die seit der letzten Anpassung verstrichene Zeit,

T0 ... eine vorzugebende Konstante.

In Fig. 3 ist dieses Vorgehen verdeutlicht. Das Zeitintervall Tmean wird vorzugsweise gleich der Schwingungsdauer der niedrigsten auftretenden Eigenfrequenz im Rad-Reifen-System gesetzt (z.B. 80 ms). Die Anpassungsphase ist dann beendet und Schalter 9 kann wieder geschlossen werden. Die Anpassungsphase kann schon vor hblauf von $T_{mean}$ abgeschlossen werden, wenn aufgrund einer Störung die Regelabweichung stark anwächst.

Werden mehrere Räder eines Fahrzeugs gemäß der Erfindung geregelt, enthalten die Referenzgeschwindigkeiten redundante Informationen über die Fahrzeugbewegung. Es ist daher zweckmäßig, wenn mit allen Rädern ein gemeinsames Bx ermittelt wird, d.h., jedes Rad kann durch die beschriebene Anpassungsvorschrift die geschätzte Fahrzeugverzögerung Bx aktualisieren Die Referenzgeschwindigkeiten selbst werden jedoch individuell für jedes Rad gebildet. Eine zusätzliche Absicherung gegen unzulässiges Absinken der Referenzgeschwindigkeit läßt sich erreichen, indem von der maximalen Referenzgeschwindigkeit $v_{Ref,max}$ ausgehend eine Untergrenze

$$v_{Refu} = \alpha \cdot V_{Ref,max}$$

berechnet wird, die von den Referenzgeschwindigkeiten der anderen Räder nicht unterschritten werden darf:

$$v_{Ref,i} \quad \text{bleibt für } v_{Ref,i} \geq v_{Refu} \qquad i = 1, \ldots, 4$$
$$v_{Ref,i} = v_{Refu} \quad \text{für } v_{Ref,i} < v_{Refu}$$

Der Index i gibt die Nummerierung der Räder an, die Größe $\alpha$ kann z.B. den Wert 0.8 annehmen.

Das Ausgangssignal U des Regelverstärkers 8 ist bei geschlossenem Schalter 9 gleich dem Eingangssignal eines Korrekturgliedes 10. Dieses korrigiert das Eingangssignal U in ein Ausgangssignal $U_2$ so, daß unterschiedliche Druckgradienten berücksichtigt werden.

Der Druckgradient, der sich aus dem Öffnen eines der Ventile ergibt, hängt von dem am Ventil wirkenden Druckunterschied ab, also auch vom im Radbremszylinder herrschenden Druck selbst. Zur Abschätzung dieses Druckes kann die Fahrzeugverzögerung oder eine dieser zugeordneten Ersatzgröße z.B. Bx verwendet werden. Diese Größe Bx wird im Korrekturglied 10 benutzt, um die Reglerausgangsgröße U in U2 umzuformen, so daß in guter Näherung gilt:

$$\Delta P = b * U, \, b \approx const.$$

worin $\Delta P$ die aus der Größe U resultierende Radbremsdruckänderung und b ein für die meisten Betriebszustände etwa konstanter Proportionalitätsfaktor ist.

Die Korrektur kann z.B. gemäß den Gleichungen

$$U_2 = U * (a1 + a2 * Bx^2), \qquad U > 0,$$
$$U_2 = U * (a2 - (a4 - a5 * Bx) * Bx), \quad U < 0$$

erfolgen, wobei $a_1$, $a_2$, $a_3$, $a_4$ und $a_5$ Konstante sind, die im Fahrversuch ermittelt werden können.

$U_2$ ist somit proportional U mit Hilfe von Bx aber so korrigiert, daß bei unterschiedlichen Drücken für gleiche Werte von U etwa gleiche Druckänderungen $\Delta P$ zustande kommen.

Der Radbremsdruck P wird mittels hydraulischer Ventile 12 eingestellt Es kann z.B. ein 3/3-Ventil benutzt werden.

Die Betätigung der Ventile geschieht durch die Vorgabe der Ventilöffnungszeit $\Delta T$, wobei folgende Vereinbarungen gelten:

$\Delta T > 0$ : Das Einlaßventil wird für eine Zeitdauer $|\Delta T|$ geöffnet, dann wieder geschlossen. Das Auslaßventil bleibt geschlossen (Druckaufbau).

$\Delta T < 0$ : Das Auslaßventil wird für eine Zeitdauer $|\Delta T|$ geöffnet, dann wieder geschlossen. Das Einlaßventil bleibt geschlossen (Druckabbau).

$\Delta T = 0$ : Einlaßventil und Auslaßventil bleiben geschlossen.

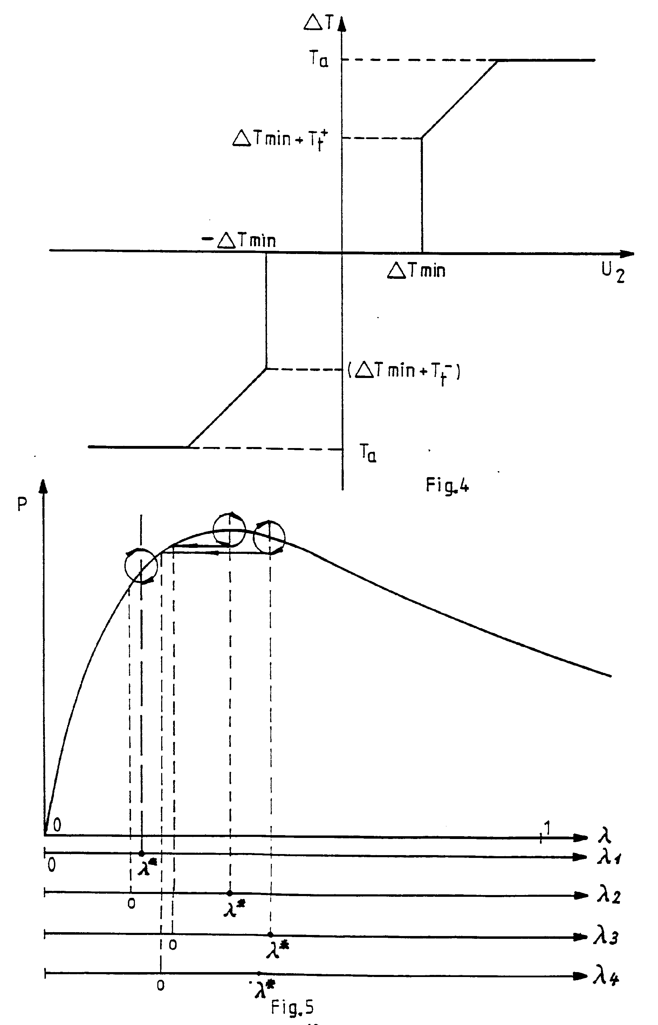

Die Öffnungszeit $\Delta T$ wird mittels eines Blocks 11 mit nichtlinearer Kennlinie aus dem korrigierten Reglerausgangssignal U2 gebildet, die dafür sorgt, daß die Ventile bei zu kleinem $|U2|$ nicht betätigt werden. Es können hier auch Verzögerungszeiten $Tt^+$, $Tt^-$ im Ansprechverhalten der Ventile berücksichtigt werden. Einen möglichen Verlauf dieser Kennlinie zeigt Fig. 4.

Anhand der Fig. 5, ist der Bremsdruck P in Abhängigkeit vom ermittelten Radschlupf dargestellt. Hieran soll der Regelablauf erläutert werden. Zum Zeitpunkt $t_1$ liegt eine Schätzung für $v_{Ref}$ und bx vor, die soeben gewonnen wurde (Anpassung). Der Schalter 9 wird geschlossen und ein Sollschlupf $\lambda^*$ eingestellt. Dies gelingt nie ganz exakt, weshalb eine geringe Regelbewegung bleibt. Sind während des Regelvorgangs alle vier Anpassungsbedingungen erfüllt, wird der Schalter 9 wieder geöffnet und der Schlupf nimmt ab. Ausgehend von diesem sich einstellenden Zustand wird eine neue Referenz bestimmt, so daß der daraus berechnete Schlupf $\approx$ 0 ist, von wo aus wieder $\lambda^*$ eingestellt wird, usw. $\lambda^*$ ist hier als eine feste Konstante angenommen (z-B- 5 %).

## Verwendete Formelzeichen

| | |
|---|---|
| $v_R$ | Radgeschwindigkeit |
| $v_F$ | Fahrzeuggeschwindigkeit |
| $v_{Ref}$ | Refernzgeschwindigkeit |
| $v_{Refu}$ | untere Grenze für die Referenzgeschwindigkeiten |
| $v_{Ref,max}$ | maximale Referenzgeschwindigkeiten |
| $v_A$ | Referenzgeschwindigkeit nach vorhergegangener Anpassung |
| Bx | geschätzte Fahrzeugverzögerung |
| $\lambda$ | Bremsschlupf |
| $\lambda^*$ | Sollschlupf |
| $\bar{\lambda}$ | mittlerer Schlupf |
| $\Delta\dot{\lambda}^*$ | Sollwert für Schlupfänderung (Konstante) |
| $\Delta\lambda$ | Regelabweichung im Schlupf |
| $\lambda_{ext}$ | externer Eingriff |
| Ta | Abtastintervalldauer |
| $\Delta T$ | Ventilöffnungsdauer |
| $\Delta Tmin$ | minimale Ventilöffnungsdauer |
| $T_t^{+/-}$ | Korrekturkonstanten |
| $T_A$ | vergangene Zeit seit letzter Anpassung |
| $T_{Amin}$ | minimale Zeit zwischen zwei Anpassungen |
| $T_{mean}$ | Mittelungsdauer |
| T0 | vorzugebende Konstante |
| U1, U2, U | Reglersignale |
| Up, Ud, Up4, Umem | Anteile von U |
| Kp, Kd, Kp4, Ki,Ku | Verstärkungsfaktoren |
| a1, ..., a5 | vorzugebende Konstanten |
| P | Radbremsdruck |
| $\Delta P$ | Radbremsdruckänderung |
| Mb | Bremsmoment |
| $\alpha$ | Proportionalitätsfaktor |
| b | Proportionalitätsfaktor |
| K | Index für Zeitschritt |
| i | Index für Rad |

## Patentansprüche

1. Bremsschlupfregler, bei dem die Abweichung $\Delta\lambda$ eines der Geschwindigkeit eines Fahrzeugrads entsprechenden Signals $v_R$ von einem vorgegebenen Anteil eines Referenzgröße $v_{Ref}$, die dem Verlauf der Fahrzeuggeschwindigkeit angenähert ist und von Zeit zu Zeit in Größe und Steigung aktualisiert wird, ermittelt und mittels eines Regelverstärkers in ein Steuersignal U verwandelt wird, wobei dieses Steuersignal zur Ansteuerung einer Bremsdurcksteuereinheit (12) ausgenutzt wird und das Ausgangssignal $\pm$ U des Regelverstärkers (8) durch eine Größe und sein Vorzeichen die Druckaufbau-Druckabbauzeit und Druckkonstanthaltezeit bestimmt, dadurch gekennzeichnet, daß der Regelverstärker (8) ein Proportional-Differential Übertragungsverhalten mit einem rücksetzbaren Integralanteil aufweist, und daß zeitweise die Regelung für kurze Zeiträume unterbrochen wird, um die Referenzgeschwindigkeit und ihre Steigung zu aktualisieren.

2. Schlupfregler nach Anspruch 1, dadurch gekennzeichnet, daß die Aktualisierung eingeleitet wird, wenn seit der letzten Aktualisierung eine bestimmte Zeit $T_{Amin}$ vergangen ist, die Abweichung $\Delta\lambda$ wenigstens einmal kleiner Null wurde, die Abweichung $\Delta\lambda > 0$ ist und $d\Delta\lambda/dt > 0$ ist.

3. Schlupfregler nach Anspruch 1 oder 2, dadurch gekennzeichnet, daß mit Beginn der Aktualisierung eine Druckhaltephase bestimmter Dauer $T_{mean}$ eingeleitet wird, daß in dieser Phase der Schlupf $\lambda$ des Fahrzeugrads gemittelt wird ($\bar{\lambda}$) und daß die neue Referenzgröße $v_{Refneu}$ und ihre neue Steigung $B_{xneu}$ mach Maßgabe der folgenden Beziehungen ermittelt

$$v_{Refneu} \approx v_{Refalt} \cdot (1 - \overline{\lambda})$$

$$B_{xneu} = \frac{(T_o \cdot B_{xalt} + V_A - v_{Refneu}) \cdot}{(1 - \overline{\lambda}) \cdot (T_A + T_0)}$$

wobei

$T_o$     eine Konstante

$V_A$     die Referenzgröße nach der letzten Anpassung

$T_A$     die Zeit seit der letzten Anpassung ist.

4. Schlupfregler nach Anspruch 3, dadurch gekennzeichnet, daß bei Regelung mehrerer Räder für alle Räder eine gemeinsame Steigung $B_x$ ermittelt wird.

5. Schlupfregler nach Anspruch 3, dadurch gekennzeichnet, daß bei Regelung mehrerer Räder die größte Referenzgeschuindigkeit ermittelt und die anderen Referenzgeschwindigkeiten dahingehend überwacht werden, daß ein vorgegebener Anteil dieser maximalen Referenzgeschwindigkeit nicht unterschritten wird.

6. Schlupfregler nach einem der Ansprüche 1 bis 5, dadurch gekennzeichnet, daß der vorgegebene Anteil der Referenzgröße von einem von außen eingegebenen Signal veränderbar ist.

7. Schlupfregler nach einem der Ansprüche 1 bis 6, dadurch gekennzeichnet, daß das Ausgangssignal U des Regelverstärkers nach Maßgabe der Beziehung

$$U = (U_P + U_D + U_{P4} + U_{mem}) K_U (v_{Ref})$$

gebildet wird, wobei sich $U_P$, $U_D$ und $U_{P4}$ aus den folgenden Beziehungen

$$
\begin{array}{lll}
Up & = Kp * \Delta\lambda & \left.\begin{array}{l} \\ \end{array}\right\} \\
Ud & = Kd * d\Delta\lambda/dt & \left.\begin{array}{l} \end{array}\right\} \text{ für } d\Delta\lambda/dt \le 0 \\
Up4 & = 0 & \left.\begin{array}{l} \end{array}\right\}
\end{array}
$$

$$
\begin{array}{lll}
Up & = 0 & \left.\begin{array}{l} \\ \end{array}\right\} \text{ für } d\Delta\lambda/dt > 0 \\
Ud & = Kd * (d\Delta\lambda/dt - \Delta\dot{\lambda}^*) & \left.\begin{array}{l} \end{array}\right\} \text{ und } \Delta\lambda \quad \le 0 \\
Up4 & = -Kp4 * (\Delta\lambda)^{\bullet} & \left.\begin{array}{l} \end{array}\right\}
\end{array}
$$

$$
\begin{array}{lll}
Up & = Kp * \Delta\lambda & \left.\begin{array}{l} \\ \end{array}\right\} \text{ für } d\Delta\lambda/dt > 0 \\
Ud & = Kd * d\Delta\lambda/dt & \left.\begin{array}{l} \end{array}\right\} \text{ und } \Delta\lambda \quad > 0 \\
Up4 & = 0 & \left.\begin{array}{l} \end{array}\right\}
\end{array}
$$

berechnen und sich der Integralanteil $U_{mem}$ aus folgenden Beziehungen ergibt:

$$
\begin{array}{ll}
Umem(K) = Umem(K-1) + Ki * \Delta\lambda ref(K-1) & \text{für } |U2(K-1)| < Tmin, \\
Umem(K) = 0 & \text{für } |U2(K-1)| \ge Tmin
\end{array}
$$

wobei $T_{min}$ die minimale Ansteuerzeit für die Druckabsenkung und Druckerhöhung, K der Index des Abtastschritts ist, $K_i$ eine Konstante und $K_u$ eine Größe ist, die die Fahrzeuggeschwindigkeitsabhängigkeit der Regelstreckenparameter beinhaltet.

8. Schlupfregler nach Anspruch 7, dadurch gekennzeichnet, daß der Anteil $U_{mem}(K)$ auch bei der Unterbrechung der Regelung auf Null gesetzt wird.

9. Schlupfregler nach einem der Ansprüche 1 bis 8, dadurch gekennzeichnet, daß das Ausgangssignal U des Regelverstärkers unter Berücksichtigung der Steigung der Referenzgeschwindigkeit oder einer dazu äquivalenten Größe in ein die Ansteuerzeit der Bremsdrucksteuereinheit bestimmendes Signal $U_2$ korrigiert wird.

10. Schlupfregler nach Anspruch 9, dadurch gekennzeichnet, daß die Korrektur durch folgende Beziehung gegeben ist:

```
U2 = U * (a1 + a2 * Bx²),              U1 > 0,
U2 = U * (a2 - (a4 - a5 * Bx) * Bx),   U1 < 0
```

11. Schlupfregler nach einem der Ansprüche 1 bis 10, dadurch gekennzeichnet, daß bei der Bestimmung der Zeitdauer der Ansteuersignale für die Bremsdrucksteuereinheit Signale (U oder $U_2$) unberücksichtigt bleiben, die eine bestimmte Größe nicht überschreiten.

**Claims**

1. Brake slip controller, in which the deviation $\Delta\lambda$ of a signal $v_R$ corresponding to the speed of a vehicle wheel is established from a given component of a reference variable $v_{Ref}$, which is approximated to the variation in vehicle speed and is updated in size and increase from time to time, and is converted by means of a control amplifier into a control signal U, this control signal being used for the actuation of a brake pressure control unit (12) and the output signal $\pm$ U of the control amplifier (8) determining by its size and its sign the pressure build-up, pressure-reduction time and keeping-pressure-constant time, characterised in that the control amplifier (8) has a proportional-plus-derivative action with a resettable integral component and in that the control is interrupted from time to time for short periods in order to update the reference speed and its increase.

2. Slip controller according to Claim 1, characterized in that the updating is introduced whenever a certain time $T_{Amin}$ has elapsed since the last updating, the deviation $\Delta\lambda$ has become less than zero at least once, the deviation $\Delta\lambda > 0$ and $d\Delta\lambda/dt > 0$.

3. Slip controller according to Claim 1 or 2, characterized in that, with the beginning of updating, a pressure maintaining phase of certain duration $T_{mean}$ is introduced, in that in this phase the slip $\lambda$ of the vehicle wheel is averaged ($\bar{\lambda}$) and in that the new reference variable $v_{Refnew}$ and its new increase $B_{xnew}$ are established according to the following relationships

$$v_{Refnew} \approx v_{Refold} \cdot (1-\bar{\lambda})$$

$$B_{xnew} = \frac{(T_o \cdot B_{xold} + V_A - v_{Refnew})}{(1 - \bar{\lambda}) \cdot (T_A + T_0)}$$

in which

$T_o$     is a constant

$V_A$     is the reference variable after the last adaptation

$T_A$     is the time since the last adaptation.

4. Slip controller according to Claim 3, characterized in that, when controlling more than one wheel, a common increase $B_x$ is established for all wheels.

5. Slip controller according to Claim 3, characterized in that, when controlling more than one wheel, the greatest reference speed is established and the other reference speeds are monitored to check that no values drop below a predetermined fraction of this maximum reference speed.

6. Slip controller according to one of Claims 1 to 5, characterized in that the given component of the reference variable can be changed by a signal input from the outside.

7. Slip controller according to one of Claims 1 to 6, characterized in that the output signal U of the control amplifier is formed according to the relationship

$$U = (U_p + U_D + U_{p4} = U_{mem}) K_U (v_{Ref})$$

in which $U_p$, $U_D$ and $U_{p4}$ are calculated from the following relationships

$$Up = Kp\ ^*\ \Delta\lambda \qquad\qquad \}$$
$$Ud = Kd\ ^*\ d\Delta\lambda/dt \qquad \}\ for\ d\Delta\lambda/dt\ \leq\ 0$$
$$Up4 = 0 \qquad\qquad\qquad \}$$

$$Up = 0 \qquad\qquad\qquad\qquad \}\ for\ d\Delta\lambda/dt\ >\ 0$$
$$Ud = Kd\ ^*\ (d\Delta\lambda/dt-\dot{\Delta\lambda}^*) \qquad \}\ and\ \ \Delta\lambda\ \ \ \leq\ 0$$
$$Up4 = -Kp4\ ^*\ (\Delta\lambda)^4 \qquad \}$$

$$Up = Kp\ ^*\ \Delta\lambda \qquad\qquad \}\ for\ d\Delta\lambda/dt\ >\ 0$$
$$Ud = Kd\ ^*\ d\Delta\lambda/dt \qquad\quad \}\ and\ \ \Delta\lambda\ \ \ >\ 0$$
$$Up4 = 0 \qquad\qquad\qquad \}$$

and the integral component $U_{mem}$ is obtained from the following relationships:

$$Umem(K)=Umem(K-1)\ +\ Ki\ ^*\ \Delta\lambda ref(K-1)\ for\ |U2(K-1)|<Tmin$$
$$Umem(K)=0 \qquad\qquad\qquad\qquad\qquad\quad for\ |U2(K-1)|\geq Tmin$$

in which $T_{min}$ is the minimum response time for the pressure reduction and pressure increase, K is the index of the sampling increment, $K_i$ is a constant and $K_u$ is a variable which incorporates the vehicle speed dependence of the controlled system parameters.

8. Slip controller according to Claim 7, characterized in that the component $U_{mem(K)}$ is set to zero also when there is an interruption in the control.

9. Slip controller according to one of Claims 1 to 8, characterized in that the output signal U of the control amplifier is corrected to a signal $U_2$ determining the response time of the brake pressure control unit, account being taken of the increase in the reference speed or of a variable equivalent to it.

10 Slip controller according to Claim 9, characterized in that the correction is given by the following relationship:

$$U2 = U\ ^*\ (a1\ +\ a2\ ^*\ Bx^2), \qquad\qquad U1\ >\ 0,$$
$$U2 = U\ ^*\ (a2\ -\ (a4\ -\ a5\ ^*\ Bx)\ ^*\ Bx),\quad U1\ <\ 0$$

11. Slip controller according to one of Claims 1 to 10, characterized in that signals (U or $U_2$) which do not exceed a certain size are ignored in determination of the period of time of the actuation signals for the brake pressure control unit.

## Revendications

1. Régulateur du glissement de freinage, dans lequel est déterminé et converti au moyen d'un amplificateur de réglage en un signal de commande U, l'écart $\Delta\lambda$ entre un signal $v_R$ correspondant à la vitesse d'une roue du véhicule et une partie prédéfinie d'une grandeur de référence $v_{Ref}$ qui reste proche de l'évolution de la vitesse du véhicule et qui est actualisée de temps en temps en grandeur et en pente, et ce signal de commande est utilisé pour la commande d'une unité de commande (12) de la pression de freinage, tandis que le signal de sortie $\pm$ U de l'amplificateur de réglage (8) détermine par sa grandeur et son signe, le temps d'établissement de la pression, le temps de suppression de la pression et le temps de maintien de la pression à un niveau constant, régulateur du glissement de freinage caractérisé en ce que l'amplificateur de réglage (8) a un comportement de transmission proportionnel-différentiel avec une partie intégrale susceptible d'être remise à l'état initial, et en ce que la régulation est interrompue périodiquement pour de courts espaces de temps afin d'actualiser la vitesse de référence et sa pente.

2. Régulateur de glissement selon la revendication 1, caractérisé en ce que l'actualisation est amorcée lorsque depuis la dernière actualisation, un temps déterminé $T_{Amin}$ s'est écoulé, que l'écart $\Delta\lambda$ est devenu au moins une fois plus petit que zéro, et que l'écart $\Delta\lambda$ est supérieur à 0 et $d\Delta\lambda/dt>$ est supérieur à 0.

3. Régulateur de glissement selon la revendication 1 ou la revendication 2, caractérisé en ce qu'au début de l'actualisation, une phase de maintien de la pression de durée déterminée $T_{mean}$ est amorcée, en ce que dans cette phase, la moyenne $(\bar\lambda)$ du glissement $\lambda$ de la roue du véhicule est formée, et en ce que la nouvelle grandeur de référence $v_{Refneu}$ et sa nouvelle pente $B_{xneu}$ sont déterminées selon les relations suivantes :

$$V_{Refact} = V_{Refanc} \cdot (1 - \bar\lambda)$$

$$B_{xactuel} = \frac{T_o \cdot B_{xancien} + V_A \cdot v_{Refactuelle})}{(1 - \bar\lambda) \cdot (T_A + T_O)}$$

dans lesquelles

$T_o$    est une constante

$V_A$    est la grandeur de référence après la dernière adaptation

$T_A$    est le temps depuis la dernière adaptation.

4. Régulateur de glissement selon la revendication 3, caractérisé en ce que dans le cas de la régulation de plusieurs roues, une pente commune Bx est déterminée pour toutes les roues.

5. Régulateur de glissement selon la revendication 3, caractérisé en ce que, dans le cas de la régulation de plusieurs roues, la vitesse de référence la plus grande est déterminée et les autres vitesses de référence sont surveillées afin qu'une partie prédéfinie de cette vitesse maximale de référence ne soit pas franchie vers le bas.

6. Régulateur de glissement selon une des revendications 1 à 5, caractérisé en ce que la partie prédéfinie de la grandeur de référence est susceptible d'être modifiée par un signal introduit de l'extérieur.

7. Régulateur de glissement selon une des revendications 1 à 6, caractérisé en ce que le signal de sortie U de l'amplificateur de réglage est formé selon la relation :

$$U = ( U_p + U_D + U_{p4} + U_{mem}) K_U (v_{Ref})$$

dans laquelle, $U_p$, $U_D$ et $U_{p4}$ se calculent à partir des relations suivantes :

$$\begin{array}{ll}
Up = Kp \star \Delta\lambda & \} \\
Ud = Kd \star d\ \Delta\lambda/dt & \}\ \text{pour}\ d\Delta\lambda/dt \\
Up4 = 0 & \} \qquad \leq 0
\end{array}$$

$$\begin{array}{ll}
Up = 0 & \}\ \text{pour}\ d\Delta\lambda/dt>0 \\
Ud = Kd \star (d\ \Delta\lambda/dt - \Delta\lambda\star) & \}\ \text{et}\ \Delta\lambda \leq 0 \\
Up4 = -Kp4 \star (\Delta\lambda) & \}
\end{array}$$

$$\begin{array}{ll}
Up = Kp \star \Delta\lambda & \}\ \text{pour}\ d\Delta\lambda/dt>0 \\
Ud = Kd \star d\Delta\lambda/dt & \}\ \text{et}\ \Delta\lambda > 0 \\
Up4 = 0 & \}
\end{array}$$

tandis que la partie intégrale $U_{mem}$ résulte des relations suivantes :

$$U_{men(K)} = U_{men(K-1)} + K_i \star \Delta\lambda_{Ref} ( K-1)$$
$$\qquad\qquad\qquad \text{pour} \qquad |U2 (K-1)| < T_{min}$$
$$U_{men(K)} = 0 \qquad\qquad \text{pour} \qquad |U2 (K-1)| \geq T_{min}$$

dans lesquelles $T_{min}$ est le temps de commande minimal pour l'abaissement de la pression et l'élévation de la pression, K l'indice de l'étape d'exploration, $K_i$ une constante et $K_u$ une grandeur qui contient la possibilité de dépendance des paramètres du système réglé vis à vis de la vitesse du véhicule.

8. Régulateur de glissement selon la revendication 7, caractérisé en ce que la partie $U_{mem(K)}$ est également mise à zéro lors de l'interruption de la régulation.

9. Régulateur de glissement selon une des revendications 1 à 8, caractérisé en ce que le signal de sortie U de l'amplificateur de réglage est corrigé en tenant compte de la pente de la vitesse de référence ou bien d'une grandeur équivalente à cette pente dans un signal $U_2$ déterminant le temps de commande de l'unité de commande de la pression de freinage.

10. Régulateur de glissement selon la revendication 9, caractérisé en ce que la correction est donnée par la relation suivante :

$$U_2 = U * (a_1 + a_2 * Bx^2) \qquad U_1 > 0$$
$$U_2 = U * (a_2 - (a_4 - a_5 * Bx) * Bx) \qquad U_1 < 0$$

11. Régulateur de glissement selon une des revendications 1 à 10, caractérisé en ce que lors de la détermination de la durée des signaux de commande pour l'unité de commande de la pression de freinage, des signaux (U ou bien $U_2$) quine dépassent pas une grandeur déterminée, ne sont pas pris en compte.

Fig.1

$$\frac{d\triangle\lambda}{dt}$$

$P^4D$

PD oder
S offen

0

0

$\triangle\lambda$

PD

PD

Fig. 2

$V_{ref}$
$V_R$
$V_F$

$V_F$

$V_{ref,alt(t_o)}$
$=V_A$

$V_{ref,alt}$

$V_{ref,neu(t_2)}$

$V_{ref,neu}$

$V_R$

$T_1$

$T_{MEAN}$

$t_o$

$t_1$

$t_2$

$t$

Fig. 3

Fig.4

Fig.5